# EUROPÄISCHE PATENTANMELDUNG

(11) **EP 0 532 995 A2**
(43) Veröffentlichungstag der Anmeldung: **24.03.1993**
(21) Anmeldenummer: 92115157.7
(22) Anmeldetag: 04.09.1992
(51) Int. Cl.: C08B 5/00, C08B 31/02, C08B 13/00

(54) **Verfahren zur Herstellung von Polysaccharidcarbonaten**

(30) Priorität: 17.09.1991 DE 4130807
(71) Anmelder: Wolff Walsrode Aktiengesellschaft, D-29655 Walsrode (DE)
(72) Erfinder: Szablikowski, Klaus, Dr., W-3030 Walrode (DE); Buysch, Hans-Josef, Dr., W-4150 Krefeld (DE); Klausener, Alexander, Dr., W-4150 Krefeld (DE)
(74) Vertreter: Braun, Rolf, Dr.

(57) **Zusammenfassung**

Vorliegende Erfindung betrifft ein Verfahren zur Herstellung von Kohlensäureestern der Polysaccharide, das dadurch gekennzeichnet ist, daß man Polysaccharide mit Kohlensäureestern umsetzt.

## Beschreibung

Vorliegende Erfindung betrifft ein Verfahren zur Herstellung von Kohlensäureestern der Polysaccharide, das dadurch gekennzeichnet ist, daß man Polysaccharide mit Kohlensäureestern umsetzt.

Kohlensäureestern von Polysacchariden sind interessante Materialien mit einer Reihe von Anwendungsmöglichkeiten, z.B. als Depots für bioaktive Verbindungen (vgl. Makromol. Chem. 186, 17 - 29 (1985), zur Fixierung von Enzymen für die Durchführung enzymatischer Reaktionen in heterogener Phase (vgl. I.C.S. Perkin I 1974, 757 -762, oder Biochemistry Internat. 4 (1982 629 - 635, oder US-PS 3 810 821), ferner auch als Ausgangsprodukte für Lackrohstoffe, Verdicker für wäßrige Lösungen und Suspensionen, z.B. in der Bauindustrie oder für Klebrohstoffe (vgl. US-PS 3 284 442 und US-PS 4 097 667).

Aus diesen Gründen hat es nicht an Bemühungen gefehlt, diese Stoffe auf verschiedene Weise zugänglich zu machen.

Alle bisher bekannt gewordenen Verfahren führen den Carbonatrest über besonders reaktive Kohlensäurederivate ein, in der Regel Chlorkohlensäureester. Dies erscheint auch sinnvoll, da die bekanntlich niedrige Reaktivität von Polysacchariden - ersichtlich an normalerweise langen Reaktionszeiten - durch den Einsatz reaktiver Reagentien ausgeglichen werden soll (vgl. US-PS 3 284 442, 3 810 821, 4 097 667 ferner Carbohydrate Research 17 (1971), die oben bereits zitierte Literatur). Bei diesen Umsetzungen wird häufig in Gegenwart von Hydroxylverbindungen, wie Wasser oder Alkoholen, oder aber in Gegenwart von teuren Lösungsmitteln gearbeitet. Dabei wird ein großer Teil der Chlorkohlensäureester in Nebenreaktionen mit Wasser oder Alkohol verbraucht. Die teuren Lösungsmittel sind nur schwer aus den komplizierten Reaktionsgemischen wiederzugewinnen. Der bei der Reaktion freiwerdende Chlorwasserstoff muß durch Basen gebunden und die üblicherweise verwendete organische Stickstoffbase aus ihren Salzen freigesetzt und wiederverwendet werden. Diese Verfahren sind also mit großem Aufwand verbunden. Darüber hinaus wird nur ein niedriger Substitutionsgrad (DS) erzielt, der für die genannten Anwendungen oft nicht ausreicht.

Eine Ausnahme diesbezüglich stellt die DE-OS 3 836 600 dar, nach der sehr hohe DS erhalten werden können. Aber auch hier ist man auf den Einsatz von Chlorkohlensäureestern angewiesen.

Nach dem derzeit bekannten Stand der Technik ist also kein einfaches und effizientes Verfahren zur Herstellung von Kohlensäureestern der Polysaccharide verfügbar, das mit einer sehr hohen Reagenzausbeute und ohne Abfallprodukte durchgeführt werden kann und zu hohen Substitutionsgraden führt.

Es wurde nun gefunden, daß man auf einfache und elegante Weise zu Kohlensäureestern von Polysacchariden gelangt, wenn man sie mit Kohlensäureestern umestert.

Gegenstand der Erfindung ist daher ein Verfahren zur Herstellung von Carbonaten der Polysaccharide, das dadurch gekennzeichnet ist, das man Polysaccharide mit Kohlensäureestern der allgemeinen Formel I 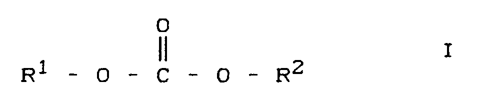
worin R¹ und R² gleich oder verschieden sind und C₁-C₁₂-Alkyl, vorzugsweise C₁-C₈, besonders bevorzugt C₁-C₄-Alkyl, Allyl- und Methallyl, Benzyl, Phenyl, Kresyl oder R¹ und R² zusammen mit der Carbonatgruppe einen Ring mit insgesamt 5 bis 12 Ringgliedern darstellen, wobei darin R¹ und R² sind:
- -(CH₂)ₙ-: mit n = 2 - 10, bevorzugt 2 - 6, besonders bevorzugt 2 und 3 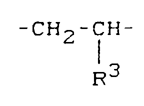 mit R³ = CH₃, C₂H₅, Phenyl, CH₂-Cl, vorzugsweise CH₃ 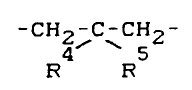 mit R⁴ und R⁵ gleich oder verschieden 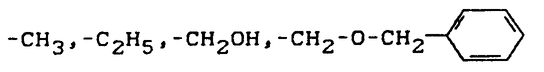 -CH₂-O-CH₂-CH = CH₂
vorzugsweise CH₃,CH₂OH,CH₂O-CH₂CH = CH₂ besonders bevorzugt CH₃
- -(CH₂-CH₂-O)ₙ-CH₂-CH₂-: mit n = 1 - 3, bevorzugt 1 - 2
bei Temperaturen zwischen 40 - 160°C, gegebenenfalls in Gegenwart von Katalysatoren umestert.

Dies ist deswegen überraschend, weil nach den bekannt langen Reaktionszeiten mit den hochreaktiven Chlorkohlensäureestern zu erwarten war, daß die wesentlich reaktionsträgeren Kohlensäureester allenfalls in technisch völlig indiskutablen Zeiten zu nennenswerten Umsätzen führen würden.

Dementgegen werden in relativ kurzen Reaktionszeiten hohe Umesterungsgrade erhalten. Besondere Vorteile bietet das erfindungsgemäße Verfahren dadurch, daß es völlig frei ist von Abfallprodukten. Die Kohlensäureester der Formel I liefern bei der Umesterung mit den Polysacchariden als Nebenprodukte lediglich die den Estern zugrunde liegenden Hydroxyverbindungen, die sich destillativ abtrennen und wieder in den Prozeß zur Herstellung der Kohlensäureester der Formel I einsetzen lassen.

Nach der US-PS 3 810 821 werden bei Umsetzungen von Polysacchariden mit Chlorkonlensäureestern neben den offenen Carbonaten auch cyclische in großem Maße, oft sogar überwiegend gebildet. Dies ist insofern nachteilig, weil durch Cyclenbildung jeweils zwei OH-Gruppen gebunden und damit die Substitutionsstellen am Polysaccharid reduziert werden. Bei einer nachfolgenden Umsetzung eines solchen Cyclen enthaltenen Polysaccharidcarbonates mit Aminogruppen, z.B. eines zu bindenden Enzyms, wird ein cyclisches Carbonat immer unter Rückbildung einer OH-Gruppe und Bildung nur einer Urethangruppe gespalten, also kann aus einem cyclischen Carbonat auch theoretisch nur zu 50 %, aus einer offenen Carbonatgruppe dagegen bis zu 100 % Urethan gebildet werden. Die Substitutionsmöglichkeien sind daher bei offenen Carbonaten wesentlich günstiger.

Die nach dem erfindungsgemäßen Verfahren erhältlichen Carbonate enthalten praktisch keine cyclischen Carbonate, sind darum einheitlicher substituiert als die bisher zugänglichen und für weitere Umsetzungen vorteilhafter einzusetzen.

### Ausgangsmaterialien:

Geeignete Ausgangsmaterialien zur Herstellung der erfindungsgemäßen Polysaccharidcarbonate sind z.B. Polyglucosane, wie Cellulose; die verschiedenen Derivate der Cellulose, wie Methylcellulose; oder gemischte Celluloseether, wie Methyl-hydroxyethylcellulose, Carboxymethylcellulose ihre verschiedenen Salze mit Natrium-, Kalium-, Calcium- oder Ammonium-, besonders quartären Ammoniumionen; Cellulosesulfat mit verschiedenen Gegenionen, etwa des Natriums, Kaliums, Calciums, Ammoniums und quartärer Ammoniumgruppen; Stärke, Dextrine, Glycogen; Polyfructosane, wie Inulin und Graminin; Polymannosane, Polygalactosane; auch gemischte Polysaccharide, wie Hemicellulosen, ferner Polyxylosane und Polyarabinosane sowie auch Heteropolysaccharide, wie Gellan, Xanthan und Pullulan.

Bevorzugte Ausgangsprodukte sind Cellulose und ihre Derivate, Stärke und Dextrine, besonders bevorzugt sind Cellulose, Methylcellulose, Ethylcellulose, Hydroxyethylcellulose, Hydroxypropylcellulose, Carboxymethylcellulose und deren Salze und Stärke.

Geeignete Kohlensäureester sind solche der Formel I worin R¹ und R² gleich oder verschieden sind und C₁-C₁₂-Alkyl, vorzugsweise C₁-C₈, besonders bevorzugt C₁-C₄-Alkyl, Allyl- und Methallyl, Benzyl, Phenyl, Kresyl oder R¹ und R² zusammen mit der Carbonatgruppe einen Ring mit insgesamt 5 - 12 Ringgliedern darstellen, wobei darin R¹ und R² sind:
- -(CH₂)ₙ-: mit n = 2 - 10, bevorzugt 2 - 6, besonders bevorzugt 2 und 3 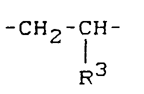 mit R = CH₃, C₂H₅, Phenyl, CH₂-Cl, vorzugsweise CH₃ 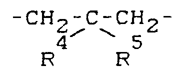 mit R⁴ und R⁵ gleich oder verschieden 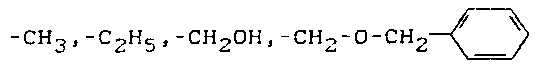 -CH₂-O-CH₂-CH = CH₂
vorzugsweise CH₃,CH₂OH,CH₂O-CH₂CH = CH₂ besonders bevorzugt CH₃
- -(CH₂-CH₂-O)ₙ-CH₂-CH₂-: mit n = 1 - 3, bevorzugt 1 - 2

Genannt seien z.B. Dialkylcarbonate, wie Dimethyl-, Diethyl-, Dipropyl-, Diisopropyl-, Dibutyl-, Diisobutyl-, Dicyclohexyl-, Dioctyl-, Didodecyl-, Diisooctyl- und Diisononylcarbonat, unsymmetrische Vertreter, wie Methylethyl-, Methylisopropyl-, Methylcyclohexyl- oder Ethylbutylcarbonat, bevorzugt sind jedoch symmetrische Carbonate. Von diesen wiederum sind besonders bevorzugt Dimethyl-, Diethyl-, Dipropyl- und Dibutylcarbonat; ganz besonders bevorzugt sind Dimethyl- und Diethylcarbonat. Genannt sind weiterhin Benzylcarbonate, wie Methylbenzylcarbonat, Ethylbenzylcarbonat und Dibenzylcarbonat, Diallyl- und dimethylallylcarbonat, Diphenylcarbonat, Di-p-kresylcarbonat, Di-o-kresylcarbonat, ferner Ethylen- und Propylencarbonat, Trimethylencarbonat, 4-Phenyldioxolanon, 4-Ethyldioxolanon, 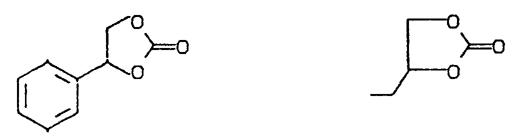
5,5-Dimethyl-1,3-dioxanon-2, 5-Ethyl-5-hydroxymethyl-1,3-dioxanon-2, 5-Ethyl-5-allyloxy-1,3-dioxanon-2 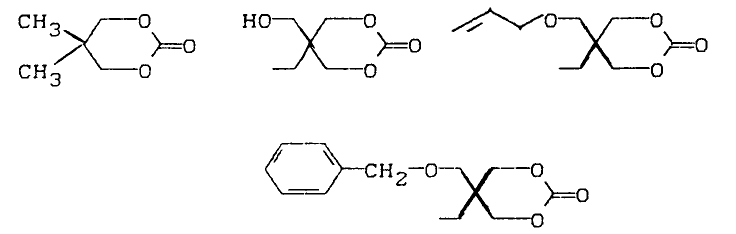
5-Ethyl-5-benzyloxy-1,3-dioxanon-2, schließlich cyclische Carbonate aus Polyglykolen, wie Diglykol, Triglykol und Tetraglykol.

Bevorzugt sind die oben schon aufgeführten einfachen Dialkylcarbonate, Diphenylcarbonat, Ethylencarbonat, 1,2-Propylencarbonat, 1,3-Propylencarbonat, 2,2-Dimethyl-1,3-propylencarbonat, 2-Ethyl-2-hydroxymethyl-1,3-propylencarbonat, 2-Ethyl-2-allyloxy-1,3-propylencarbonat.

Die Reaktion kann prinzipiell ohne Katalysator durchgeführt werden. In der Regel ist es jedoch vorteilhaft und verkürzt die Dauer der Umesterung, wenn ein Katalysator verwendet wird. Geeignete Katalysatoren sind Verbindungen der Alkali- und Erdalkalimetalle, des Zinks, Cobalts, Titans, Zirkons, des Thalliums, Bleis und des Zinns ferner organische Basen, wie Stickstoffbasen und deren Quaternisierungsprodukte.

Als Verbindungen dieser Metalle können genannt werden die Hydride, die Hydroxide, Oxide, Carbonate, Alkoholate, wie Methylate, Ethylate, Isopropylate, Butylate, Dodecylate, Sulfate, Nitrate; Carboxylate, wie Acetate, Propionate, Benzoate oder Stearate, die Halogenide, Rhodanide, Cyanide und im Falle des Zinns auch Alkyl-, Dialkyl- und Trialkyl- bzw. Phenylzinn-chloride, -carboxylate, -alkoholate, -oxide oder Hydroxide; bevorzugt sind Verbindungen der Alkalimetalle, des Zinks, Zinns und Titans als Hydroxide, Oxide, Carbonate, Alkoholate, Carboxylate und im Falle des Zinns als Mono-, Di- und Trialkylzinnoxide, -hydroxide, -carboxylate und Alkoholate.

Geeignete Basen für die Herstellung der erfindungsgemäßen Polysaccharidcarbonate sind tertiäre Stickstoffbasen aus der aliphatischen, aromatischen und heterocyclischen Reihe, wie Trimethylamin, Triethylamin, Tributylamin, Dimethyl-cyclohexylamin, Diisopropyl-ethylamin, Dicyclohexyl-methylamin, Dimethyl-β-methoxyethylamin, N,N,N',N'-Tetramethylethylendiamin, N,N,N',N'-Tetramethyl-β,β'-diamino-diethylether, N;N'-Dimethylpiperazin, N-Methyl-morpholin und Diazabicylooctan, N,N'-Dimethylanilin, N,N-Diethylanilin, N,N,N',N'-Tetramethyldiaminobenzol, N,N-Dimethyltoluidin, N,N-Diethylxylidin, N,N-Dimethylanisidin und N-Phenylmopholin, Pyrazol, N-Alkylpyrazol, Imidazol, N-Methylimidazol, Triazol, N-Ethyltriazol, N,N-Dimethylamino-imidazol, N,N-Diethylamino-triazol, Pyridin, α,β-, -Picolin, die Lutidine, Collidin, Ethylmethylpyridine, N,N-Dialkylaminopyridine, wie N,N-Dimethyl-4-aminopyidin, Chinolin, Methylchinolin und Isochinolin.

Bevorzugt sind Diazabicyclundecen, Diazabicyclononen, Triethylamin, Dimethylcyclohexylamin, Methylmorpholin, Dimethylpiperazin und Diazabicyclooctan, Tetramethylethylendiamin, Triazol, Aminotriazol, Diethylaminotriazol, Imidazol, N-Methylimidazol, N,N-Dimethylaminoimidazol, Pyridin, Chinolin und die Methyl- und Ethylpyridine.

Das Verfahren wird zweckmäßig bei erhöhter Temperatur durchgeführt. Sie beträgt 40 bis 160°C, vorzugsweise 60 bis 150°C, besonders bevorzugt 70 bis 140°C.

Man kann unter verschiedenen Drücken arbeiten, und zwar im Bereich von 0,1 mbar bis 10 bar, vorzugsweise von 1 mbar bis 5 bar, besonders bevorzugt von 2 mbar bis 3 bar. In der Regel kann bei Atmosphärendruck umgeestert werden. Sollen gebildete Hydroxyverbindungen während der Umeesterung entfernt werden, ist gegebenenfalls erniedrigter Druck, bei Umesterung mit niedrigsiedenden Dialkylcarbonaten bei relativ hohen Temperaturen erhöhter Druck angezeigt.

In vielen Fällen läßt sich die Umsetzung in den jeweils verwendeten Kohlensäureestern als Reaktionsmedium durchführen. Soll jedoch nur wenig Kohlensäureester eingesetzt werden oder hat der Kohlensäureester einen relativ hohen Schmelzpunkt, so empfiehlt sich die Mitverwendung eines Lösungsmittels als Verdünner und Suspensionsmittel bzw. Lösungsmittel für das Polysaccharid.

Geeignete Lösungsmittel bzw. Suspensionsmittel sind z.B. Cyclohexan, Pentan, Heptan, Isooctan, Benzol, Toluol, Methylenchlorid, Chloroform, Dichlorethan, Trichlorethylen, Chlorbenzol, Dichlorbenzol, Brombenzol, Diethylether, Diisopropylether, Dibutylether, Dioxan, Benzodioxan, Anisol, Dimethoxybenzol, Ethylenglykoldimethylether, Diethylenglykol-di-methylether, Essigsäureethylester, Essigsäurebutylester, Propionsäureethylester, Buttersäureethylester, Benzoesäureethylester, Malonsäurediethylester, Bernsteinsäurediethylester, Aceton, Methylethylketon, Diethylketon, Methylisopropylketon, Acetophenon, Cyclohexanon, Formamid, Methylformamid, Dimethylformamid, Dimethylacetamid, Tetramethylharnstoff, N,N-Dimethyl-ethylenharnstoff, N,N-Dimethyl-2,6-diaza-4-oxa-cyclohexanon, N-Methylpyrrolidon, N-Methylcaprolactam, Acetonitril, β-Methoxy-propionitril und β-Cyano-ß'-methoxy-diethylether.

Grundsätzlich kann das Polysaccharid in gelöster Form umgesetzt werden. Dies ist in der Regel mit großen Reaktionsvolumina verbunden. Daher wird bevorzugt in Suspension oder Dispersion gearbeitet. Als Dispergierungsmittel werden, wie oben beschrieben, die jeweils zu verwendenden Kohlensäureester oder die oben angegebenen Lösungsmittel verwendet.

Das Molverhältnis von Kohlensäureester zu Polysaccharid ist nicht kritisch und kann zwischen 100 : 1 bis 1 : 20 variieren, vorzugsweise 80 : 1 bis 1 : 15, besonders bevorzugt 60 : 1 bis 1 : 10.

Der Substitutionsgrad des Polysaccharids kann beeinflußt werden unter sonst gleichen Bedingungen durch die Menge des angebotenen Kohlensäureesters bzw. dessen Verdünnung durch Lösungs- oder Dispergierungsmittel, durch die Reaktionszeit und Art und Menge des eingesetzten Katalysators, wobei der Substitutionsgrad um so höher wird, je mehr Kohlensäureester bzw. Katalysator verwendet wird, je aktiver der Katalysator und je länger die Reaktionszeit ist, die zwischen 0,5 bis 40 h, vorzugsweise 1 bis 30 h, besonders bevorzugt 1 bis 25 h beträgt.

Zur Durchführung der Umesterung werden das Polysaccharid, der Kohlensäureester (und gegebenenfalls ein Dispergierungsmittel) in einer solchen Menge, daß eine gut rührbare Dispersion entsteht, zusammen mit dem gegebenenfalls vorgesehenen Katalysator unter Rühren auf die Reaktionstemperatur erhitzt. Dabei kann die gebildete Hydroxyverbindung je nach deren Siedepunkt und den eingestellten Bedingungen aus dem Reaktionsgemisch destillativ entfernt werden oder aber auch im Reaktionsgemisch verbleiben. Der Fortschritt der Reaktion kann durch IR-spektroskopische Untersuchung von Polysaccharidproben, durch Bestimmung von deren CO₂-Gehalt, durch Verseifung oder durch gaschromatografische Bestimmung der gebildeten Hydroxyverbindungen ermittelt werden.

Nach Beendigung der Umesterung wird das Polysaccharidcarbonat abgesaugt, gegebenenfalls gewaschen und getrocknet.

Das Filtrat kann durch Destillation aufgearbeitet, überschüssiger Kohlensäureester in die Umesterung und die Hydroxyverbindung in die Kohlensäureestersynthese zurückgeführt werden.

In einigen Fällen, z.B. im Fall von Cellulosen unterschiedlicher Herkunft sollte eine Vorbehandlung des Polysaccharids erfolgen, um es für die Umesterung aufzuschließen. Ein solcher Aufschluß kann nach üblichen Methoden durch Einwirkung von Natriumhydroxidlösungen, von Ammoniak, Aminen und quartären Ammoniumverbindungen vorgenommen werden (vergleiche Ullmanns Encyclopedia 4th Edition Vo. 5a p. 383 ff ). Die Aufschlußmittel können durch Lösungsmittel und diese durch die Kohlensäureester verdrängt werden. Jedoch können auch Teile der Aufschlußmittel als Katalysatoren in dem Polysaccharid verbleiben. Auch die durch Verdrängung der Aufschlußmittel mit Lösungsmittel gebildete Inclusionscellulosen (vergleiche Ullmann's l.c.) können für die Umesterung verwendet werden.

Der Gegenstand der Erfindung soll anhand der folgenden Beispiele noch näher erläutert werden.

### Beispiel 1

137 g einer handelsüblichen Fichtencellulose wurden mit einer 76 g NaOH enthaltenen wäßrig-isopropanolischen Lösung von etwa 2 l einige Stunden bei 25°C gerührt, abgesaugt und mit Methanol alkalifrei gewaschen, abgesaugt und Methanol mit Dimethylcarbonat verdrängt.

100 g dieser feuchten Cellulose wurde 3 h lang mit etwa 1 l Dimethylcarbonat und 1 g Kaliumhydroxid unter Rückfluß gekocht. Nach Absaugen, mehrmaligem gründlichen Waschen mit Methanol und Trocknen bei 50°C im Vakuum blieben 75 g Methylcarbonatcellulose mit einem CO₂-Gehalt von 4,5 Gew.-% und einer deutlichen CO-Bande im IR-Spektrum bei 1755 cm⁻¹. Nach kurzem Auskochen der Carbonatcellulose mit Methanol traten keine Veränderungen von Intensität und Lage der Bande auf.

### Beispiel 2

100 g der wie in Beispiel 1 vorbehandelten feuchten Fichtencellulose wurde mit 1 l Dimethylcarbonat und 5 g KOH 6 h lang auf 84°C gehalten unter Abdestillieren von Methanol und Dimethylcarbonat. Nach Absaugen und gründlichem Waschen mit Wasser und anschließend Isopropanol und Trocknen bei 50°C im Vakuum blieben 73 g Methylcarbonatcellulose mit einem CO₂-Gehalt von 8,2 Gew.-% und einer beträchtlichen CO-Absorption im IR-Spektrum bei 1756 cm⁻¹.

### Beispiel 3

Beispiel 2 wurde wiederholt, wobei die Reaktionszeit auf 10 h erhöht wurde. Dabei fiel eine Methylcarbonatcellulose an mit einem CO₂-Gehalt von 12,9 Gew.-%.

### Beispiel 4

137 g einer handelsüblichen Fichtencellulose werden wie im Beispiel 1 mit wäßrig-isopropanolischer Natronlauge aktiviert, die Natronlauge mit Isopropanol verdrängt und dieses wiederum gegen Cyclohexan ausgetauscht.

100 g dieser Cyclohexan enthaltenen Inclusionscellulose wurden mit 800 g Dimethylcarbonat und 0,4 g NaOH 10 h wie in Beispiel 2 umgeestert, abgesaugt, mit Isopropanol gewaschen und getrocknet. 49 g Methylcarbonatcellulose wurden isoliert: CO₂-Gehalt 15 Gew.-% starke CO-Bande im IR-Spektrum bei 1755 cm⁻¹.

### Beispiel 5

100 g Kartoffelstärke wurden mit 500 ml Dimethylcarbonat und 0,5 g KOH 6 h bei 80°C gerührt. Man erhielt nach Absaugen, Waschen mit Isopropanol und Trocknen 90 g Methylcarbonatstärke mit einer ausgeprägten CO-Absorption im IR-Spektrum bei 1751 cm⁻¹.

### Beispiel 6

42 g einer Hydroxyethylcellulose mit einem DS von etwa 1,1 wurde mit 400 ml Dimethylcarbonat und 0,4 g KOH 6 h bei 84°C gerührt. Nach Abtrennen des Dimethylcarbonates, Waschen mit Isopropanol, Wasser und schließlich Methanol und Trocknen bleiben 41 g einer Hydroxyethylmethylcarbonatcellulose mit einem CO₂-Gehalt von 8,0 Gew.-% und einer starken CO-Bande im IR-Spektrum bei 1757 cm⁻¹.

### Beispiel 7

100 g einer handelsüblichen Hydroxyethylcellulose mit einem DS von 1,1 wurde mit 400 g Diphenylcarbonat und 0,5 g KOH 1 h auf 120°C erhitzt unter Abdestillieren von Phenol bei 1,4 mbar. Der Rückstand wurde in Isopropanol aufgenommen und mehrmals gründlich mit Isopropanol gewaschen. Nach Trocknen blieben 105 g mit einem CO₂-Gehalt von 11 Gew.-% und einer starken CO-Bande im IR-Spektrum bei 1762 cm⁻¹.

### Beispiel 8

100 g eines handelsüblichen Carboxymethylcellulose-Na-Salzes wurde mit 100 g Ethylencarbonat und 2,5 g Imidazol in 500 ml Chlorbenzol 6 h bei 110 bis 120°C gerührt. Nach Absaugen, Waschen mit Isopropanol und Trocknen blieben 106 g eines Carboxymethylcellulose-Carbonats mit einer deutlichen CO-Absorption im IR-Spektrum neben der Carboxylatbande.

### Beispiel 9

100 g einer Fichtencellulose (feucht), wie im Beispiel 1 aktiviert, 200 g Ethylencarbonat und 0,5 g KOH wurden in ca. 300 ml Chlorbenzol bei 100 bis 110°C 4 h gerührt. Nach Absaugen, gründlichem Waschen mit Isopropanol und Trocknen erhielt man eine Carbonatcellulose mit einer ausgeprägten CO-Absorption im IR-Spektrum bei 1746 cm⁻¹.

### Beispiel 10

100 g einer handelsüblichen Hydroxyethylcellulose wurden mit 1 l Dimethylcarbonat und 5 g KOH werden 12 h bei 80°C gerührt unter Abdestillieren von Methanol-Dimethylcarbonatgemische. Nach Aufarbeitung durch Absaugen, Waschen mit Isopropanol und Trocknen blieben 132 g mit einem CO₂-Gehalt von 21,2 Gew.-%.

## Patentansprüche

1. Verfahren zur Herstellung von Polysaccharidcarbonaten, dadurch gekennzeichnet, daß man Polysaccharide mit Kohlensäureestern umsetzt.

2. Verfahren nach Anspruch 1, dadurch gekennzeichnet, daß man Polysaccharide mit Kohlensäureestern der allgemeinen Formel I 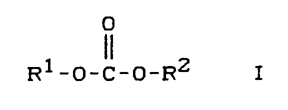 worin R¹ und R² gleich oder verschieden sind und C₁-C₁₂-Alkyl, vorzugsweise C₁-C₈, besonders bevorzugt C₁-C₄-Alkyl, Allyl- und Methallyl, Benzyl, Phenyl, Kresyl oder R¹ und R² zusammen mit der Carbonatgruppe einen Ring mit insgesamt 5 bis 12 Ringgliedern darstellen, bei Temperaturen zwischen 40 - 160°C, gegebenenfalls in Gegenwart von Katalysatoren umestert.

3. Verfahren nach einem der Ansprüche 1 oder 2, dadurch gekennzeichnet, daß man die Umsetzung in Gegenwart von Verbindungen der Alkali-, Erdalkalimetalle, des Zinks, Cobalts, Titans, Zirkons, Thalliums, Bleis, Zinns und/oder in Gegenwart von Stickstoffbasen beziehungsweise deren Quaternierungsproduktendurchführt.
